# EUROPEAN PATENT APPLICATION

(11) **EP 2 447 580 A2**
(43) Date of publication of application: **02.05.2012**
(21) Application number: 11187165.3
(22) Date of filing: 28.10.2011
(51) Int. Cl.: F16K 24/04

(54) **Automatic bleed valve assembly**

(30) Priority: 01.11.2010 US 408799 P; 27.10.2011 US 282641
(71) Applicant: Hale Products, INC., Conshohocken, PA 19428 (US)
(72) Inventor: Laskaris, Michael A., Collegeville, PA 19426 (US)
(74) Representative: Petraz, Gilberto Luigi

(57) **Abstract**

An automatic bleed valve assembly (10) for intake gas in an intake line supplying a liquid has a body (12) having a chamber (18) in fluid communication with an inlet port (14) and an outlet port (16). A movable member (24) in the chamber (18) is movable in translation between an inlet-port sealing position and an outlet-port sealing position. A biasing member (26) operatively coupled to the movable member (24) and to the chamber (18) is configured to apply to the movable member (24) a reactive force directed toward the inlet port (14), the reactive force being greater than a gas-resistance force applied to the movable member (24) by the intake gas when the intake gas is flowing into the chamber (18) and less than a liquid-resistance force applied to the movable member by the liquid when the liquid is flowing into the chamber (18).

## Description

### CROSS-REFERENCE TO RELATED APPLICATIONS

This application is related to U.S. Provisional Patent Application No. 61/408,799, filed November 1, 2010, incorporated herein by reference, and claims the earlier filing date of the provisional application.

### BACKGROUND OF THE INVENTION

The present invention relates to an automatic bleed valve assembly. More particularly, the present invention relates to an automatic air bleed valve assembly for venting air from a fire hose attached to the intake of a fire truck pump.

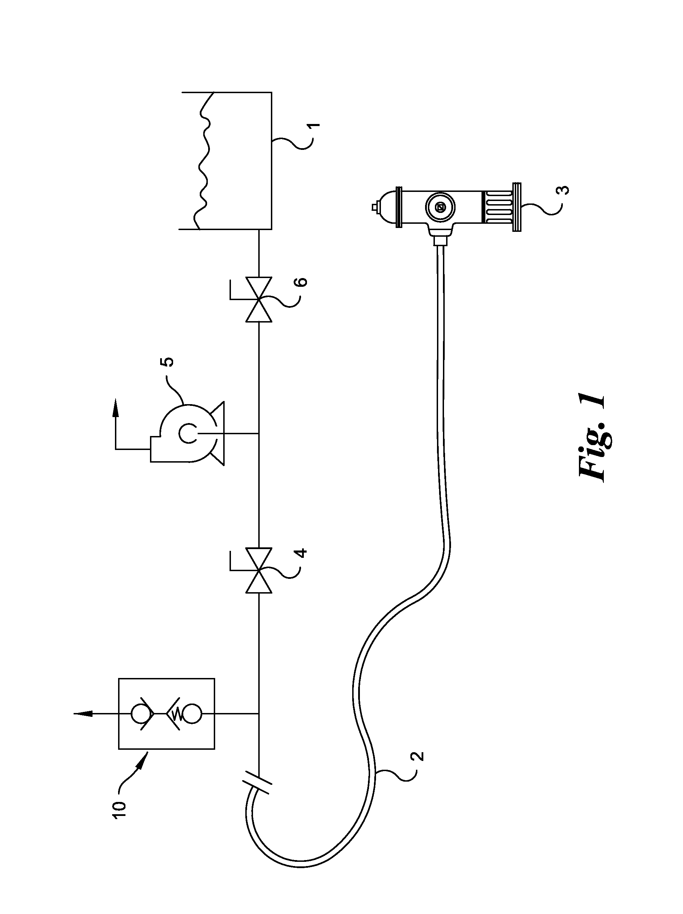

Referring to Fig. 1, typical fire trucks (not shown) have an on-board water tank 1 (or reservoir) to allow the pumping of water onto a fire upon the immediate arrival of the fire truck at a fire scene. At the same time as the initial pumping of water from the reservoir, a large diameter lay-flat hose 2 is run from the fire truck to the nearest fire-scene-available water source 3, such as a fire hydrant (or a pressurized wet standpipe). One end of the hose 2 is connected to the water source 3 and the other end to the intake valve 4 of a fire pump 5 (generally a centrifugal pump) on the fire truck. Once the water source is turned "On" and the hose is charged with water, the pump intake valve 4 is opened and the tank outlet valve 6 controlling the flow of water from the on-board water tank 1 is closed so that the fire pump is supplied with water from the hydrant or standpipe.

When the lay-flat hose 2 is initially charged with water, residual air entrapped in the hose is often pushed ahead of the water as the lay flat hose contains some air even when flat in storage on the fire truck. The trapped air must be removed to avoid problems caused by a water hammer or by cavitation in the water pump 5.

Typically, removal of the air from the hose is accomplished with a manually operated ball valve or by charging the hose with water before it is attached to the pump. Both of these methods have problems. In the first case, an operator may forget to open the manually operated ball valve. In the second case, the weight of the hose filled with water is an operator hazard as the hose is difficult to simultaneously lift and connect to the pump intake.

As an alternative to the conventional practice, an automatic intake air bleed valve assembly for venting air from the lay-flat hose without operator intervention is highly desirable.

### BRIEF SUMMARY OF THE INVENTION

Briefly stated, one aspect of the present invention is directed to an automatic bleed valve assembly for intake gas in an intake line supplying a liquid. The valve assembly comprises a body having an inlet port, an outlet port and a chamber in fluid communication with the inlet port and the outlet port. An inlet-port sealing surface is in the chamber. An outlet-port sealing surface is in the chamber. A movable member in the chamber is movable in translation between an inlet-port sealing position in which the movable member is in sealing contact with the inlet-port sealing surface and an outlet-port sealing position in which the movable member is in sealing contact with the outlet-port sealing surface. A biasing member operatively coupled to the movable member and to the chamber is configured to apply to the movable member a reactive force directed toward the inlet port, the reactive force being greater than a gas-resistance force applied to the movable member by the intake gas when the intake gas is flowing into the chamber and less than a liquid-resistance force applied to the movable member by the liquid when the liquid is flowing into the chamber.

### BRIEF DESCRIPTION OF THE SEVERAL VIEWS OF THE DRAWINGS

The foregoing summary, as well as the following detailed description of preferred embodiments of the invention, will be better understood when read in conjunction with the appended drawings. For the purpose of illustrating the invention, there is shown in the drawings embodiments which are presently preferred. It should be understood, however, that the invention is not limited to the precise arrangements and instrumentalities shown.

In the drawings:

Fig. 1 is a schematic diagram of an embodiment of an automatic intake air bleed valve in accordance with the present invention as typically installed at a fire scene;

Fig. 2 is an enlarged schematic diagram of the automatic intake air bleed valve of Fig. 1;

Fig. 3 is a cross sectional view of the automatic intake air bleed valve of Fig. 1;

Figs. 4A and 4B are cross sectional views of the automatic intake air bleed valve of Fig. 1 showing the movable member in a first position sealing the inlet port and a second position sealing the outlet port;

Fig. 5 is a cross sectional view of another embodiment of an automatic intake air bleed valve in accordance with the present invention; and

Fig. 6 is a cross sectional view of still another embodiment of an automatic intake air bleed valve in accordance with the present invention.

### DETAILED DESCRIPTION OF THE INVENTION

Reference will now be made in detail to embodiments of the invention, examples of which are illustrated in the accompanying drawings. The terminology used in the description of the invention herein is for the purpose of describing particular embodiments only and is not intended to be limiting of the invention.

As used in the description of the invention and the appended claims, the singular forms "a", "an" and "the" are intended to include the plural forms as well, unless the context clearly indicates otherwise. The words "and/or" as used herein refers to and encompasses any and all possible combinations of one or more of the associated listed items. The words "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The words "right," "left," "lower" and "upper" designate directions in the drawings to which reference is made. The words "inwardly" and "outwardly" refer to directions toward and away from, respectively, the geometric center of the automatic bleed valve assembly, and designated parts thereof. The terminology includes the words noted above, derivatives thereof and words of similar import.

Although the words first, second, *etc.,* are used herein to describe various elements, these elements should not be limited by these words. These words are only used to distinguish one element from another. For example, a first tube could be termed a second tube, and, similarly, a second tube could be termed a first tube, without departing from the scope of the present invention.

As used herein, the words "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

The following description is directed towards various embodiments of an automatic air bleed valve assembly in accordance with the present invention.

Referring to the drawings in detail, where like numerals indicate like elements throughout, there is shown in Figs. 1-4B a first preferred embodiment of the automatic intake air bleed valve assembly, generally designated 10, and hereinafter referred to as the "valve assembly" 10 in accordance with the present invention. The valve assembly 10 is for venting to atmosphere air entrapped in the water supply hose 2 attached to the intake valve 4 of a fire truck water pump 5.

The valve assembly 10 has a body 12 with an inlet port 14 and an outlet port 16. The inlet port 14 is configured for fluid connection with a lay-flat hose 2 and an intake valve 4 of a fire pump 5. The connection may be through a "T" joint, "Y" joint or the like and typically requires a threaded or Storz connection *(see,* U.S. Patent No. 489,107 incorporated herein by reference). Alternatively, the valve assembly 10 may be integrated with the pump intake valve 4.

The body 12 has an internal chamber 18 between the inlet port 14 and the outlet port 16. The internal chamber 18 is in fluid communication with both the inlet and outlet ports 14, 16. The internal chamber 18 has an inlet port seating surface 20 surrounding the entrance of the inlet port 14 into the internal chamber 18. In one embodiment the inlet port seating surface 20 may have the shape of an internal surface of the frustum of a hollow cone. Alternatively, the inlet port seating surface 20 may have the configuration of any of a variety of well known sealing surfaces such as a radially inwardly extending lip or channel for receiving a sealing material 34 such as an O-ring or gasket.

The internal chamber 18 also has an outlet port seating surface 22 surrounding the entrance of the outlet port 16 into the internal chamber 18. In one embodiment the outlet port seating surface 22 may have the shape of an annulus with a planar surface. Alternatively, the outlet port seating surface 22 may have the configuration of any of a variety of well known sealing surfaces such as the internal surface of the frustum of a hollow cone or a channel or flat for receiving a sealing material 34 such as an O-ring or gasket.

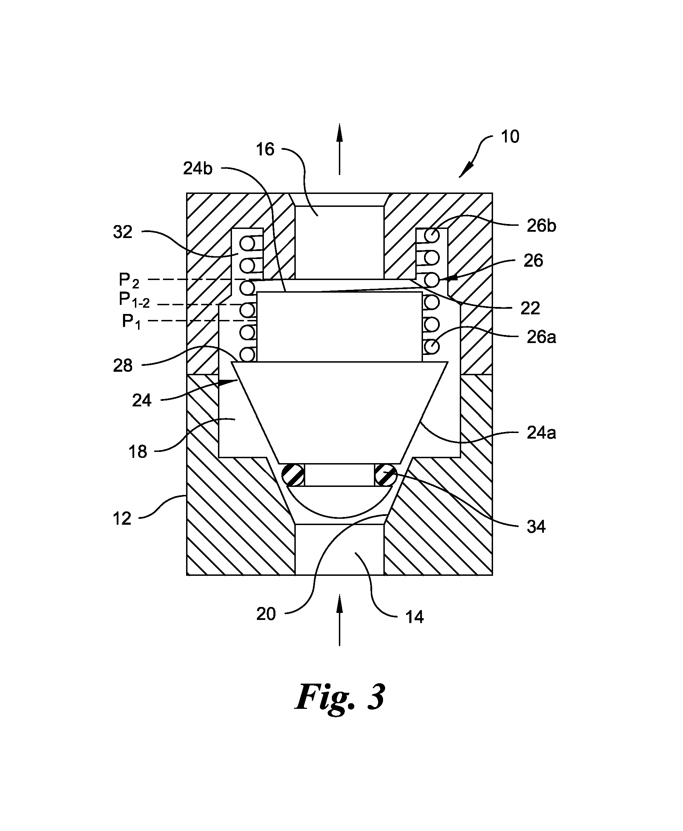

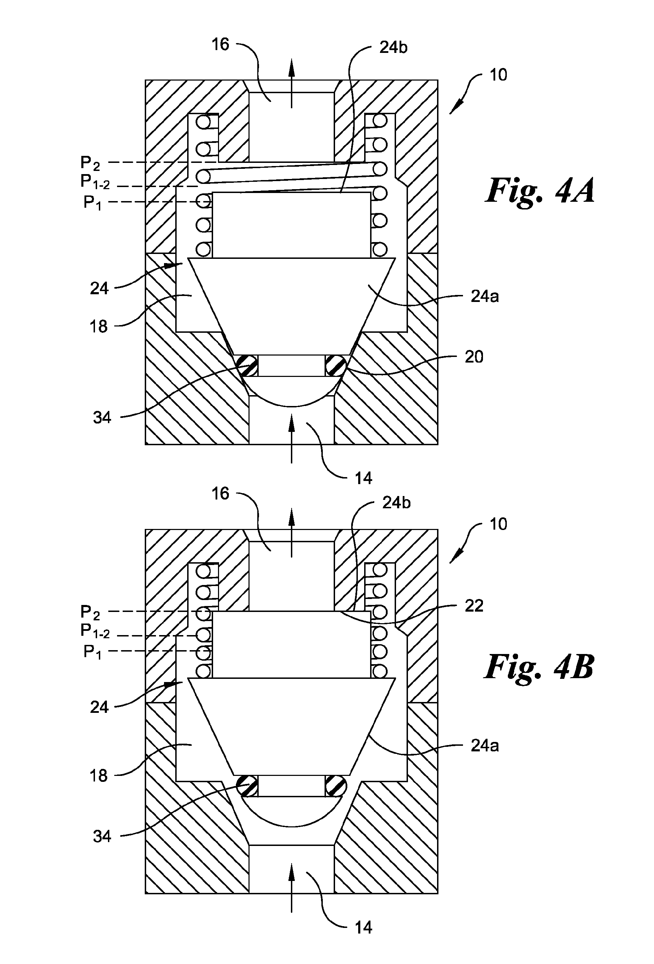

A movable member (or piston) 24 in the internal chamber 18 is movable in translation between a first position P₁, shown in Fig. 4A, in which the movable member 24 is in contact with the inlet port seating surface 20 and a second position P₂, shown in Fig. 4B, in which the movable member 24 is in contact with the outlet port seating surface 22. When the movable member 24 is in the first position P₁, contact between the movable member 24 and the inlet port seating surface 20 seals the inlet port 14 preventing the flow of fluid from the internal chamber 18 into the inlet port 14. This prevents a vacuum leak when the pump is operating from negative pressure or draft. When the movable member 24 is in the second position P₂, contact between the movable member 24 and the outlet port seating surface 22 seals the outlet port 16 preventing the flow of fluid into the outlet port 16. In one embodiment, either the seating surfaces 20, 22 of the inner chamber 18 or the surfaces of the movable body 24 in contact with the seating surfaces 20, 22 may have a sealing material such as an O-ring or gasket applied or attached thereto (*See* Fig. 3).

The movable member 24 is biased toward the inlet port 14 by a resilient member 26. In one embodiment, the resilient member 26 may be a compressible coil spring. In other embodiments, the resilient member 26 may a porous compliant material.

In one embodiment, the movable member 24 is a body of revolution having a first end 24a proximal to the inlet port 14 and a second end 24b proximal to the outlet port 16. Preferably, the first end 24a of the movable member 24 may have a generally conical shape configured to make sealing contact with the inlet port seating surface 20 when the movable member is in the first position P₁. Alternatively, the first end 24a of the movable member 24 may have a generally hemispherical, elliptical or elongated shape configured to make sealing contact with the inlet port seating surface 20. Still further, the first end 24a of the movable member 24 may have any shape congruent with the shape of the inlet port seating surface 20.

In one embodiment, the second end 24b of the movable member 24 may have a generally cylindrical shape terminating in a disk-like surface perpendicular to the axis along which the movable member 24 travels. The disk-like surface makes sealing contact with the outlet port seating surface 22 when the movable member is in the second position P₂. Alternatively, the second end 24b of the movable member 24 may have a generally hemispherical, elliptical or elongated shape configured to make a sealing contact with the outlet port seating surface 22. Still further, the second end 24b of the movable member 24 may have any shape congruent with the shape of the outlet port seating surface 22.

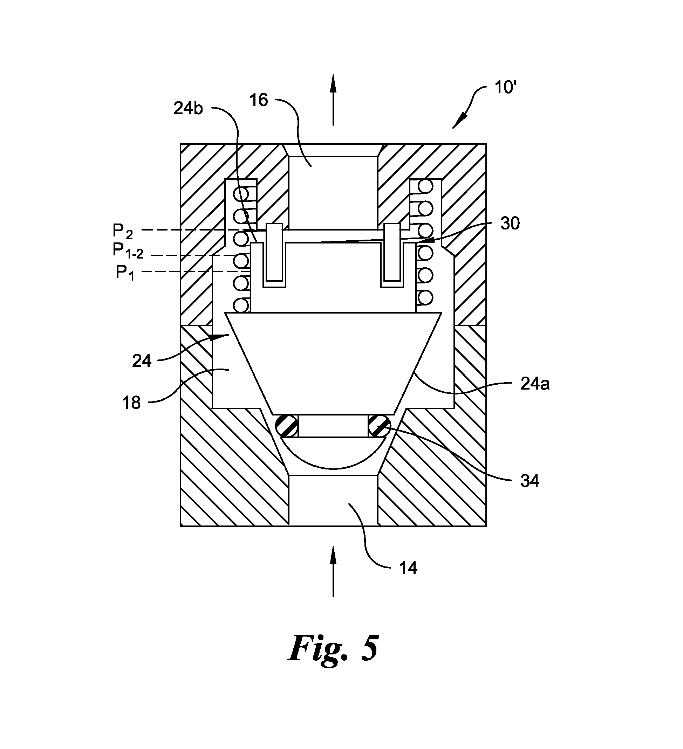

A resilient member 26 is positioned within the internal chamber 18 between the outlet port 16 and the movable member 24. The resilient member 26 has a first end 26a proximal to the second end 24b of the movable member 24 and a second end 26b proximal to the outlet port 16. The first end 26a of the resilient member 26 is operatively coupled to the movable member 24 in an manner that biases the movable member 24 toward the inlet port 14 and also allows the movable member 24 to move relative to the resilient member 26 to make a sealing contact with the inlet port seating surface 20 when the pressure in the inlet port 14 is less than the pressure in the inner chamber 18 thereby acting as a check valve preventing fluid flow from the inner chamber 18 into the inlet port 14. Preferably, the resilient member 26 is coupled to the moveable member 24 by a circumferential step 28 extending radially outwardly from the movable member 26. In another embodiment designated 10', the resilient member 26 may be coupled to the movable member 24 by a slot and peg assembly 30 (See Fig. 5) allowing the movable member 24 to contact the inlet port seating surface 20 after the resilient member 26 achieves full extension.

The second end 26b of the resilient member 26 is operatively coupled to the wall of the inner chamber 18 proximal to the outlet port 16 in any manner allowing the valve body 12 to apply a reactive force to the resilient member 26. In one embodiment, the second end 26b of the resilient member 26 is retained in a circumferential channel 32 surrounding the outlet port 16.

The resilient member 26, in cooperation with the movable member 24, allows the valve assembly 10 to function like a spring loaded normally closed valve that remains open venting air to the atmosphere and that closes when the flow of water past the piston creates a greater differential pressure exceeding the biasing force of the resilient member 26.

Referring to Figs. 3, 4A and 4B, when air is venting to the atmosphere, the movable member is in an intermediate position P₁₋₂ between the first position P₁ and the second position P₂. In the intermediate position P₁₋₂, the movable member 24 is spaced from both the inlet port seating surface 20 and is also spaced from the outlet port seating surface 22. As water flows through the hose connected to the inlet port 14, a volume of air in the hose down stream from the water is pushed ahead of the water and is compressed and pressurized by the upstream column of water. The pressurized air pushes the movable member 24 off the inlet port seating surface 20. Since the air flowing past the movable member 24 does create enough drag to completely overcome the biasing force of the resilient member 26, the outlet port 16 remains open allowing air flow through the valve. After the air has evacuated and water arrives at the inlet port 14, the pressure drop across the movable member 24 increases and the movable member 24 moves from the intermediate position P₁₋₂ to the second position P₂ and the second end 24b of the movable member 24 makes sealing contact with the outlet port seating surface 22.

In one embodiment, the valve assembly 10 allows the bleeding of air at air flow pressures within the supply hose 2 that are typically 60-100 psi and closes and keeps sealed the outlet port 16 when the water pressure in the supply hose is in the range of 7 ― 10 psi. In other embodiments, the valve assembly 10 may be configured to allow the bleeding of air at pressures less than 60 psi and/or greater that 100 psi without departing from the general concept of the invention.

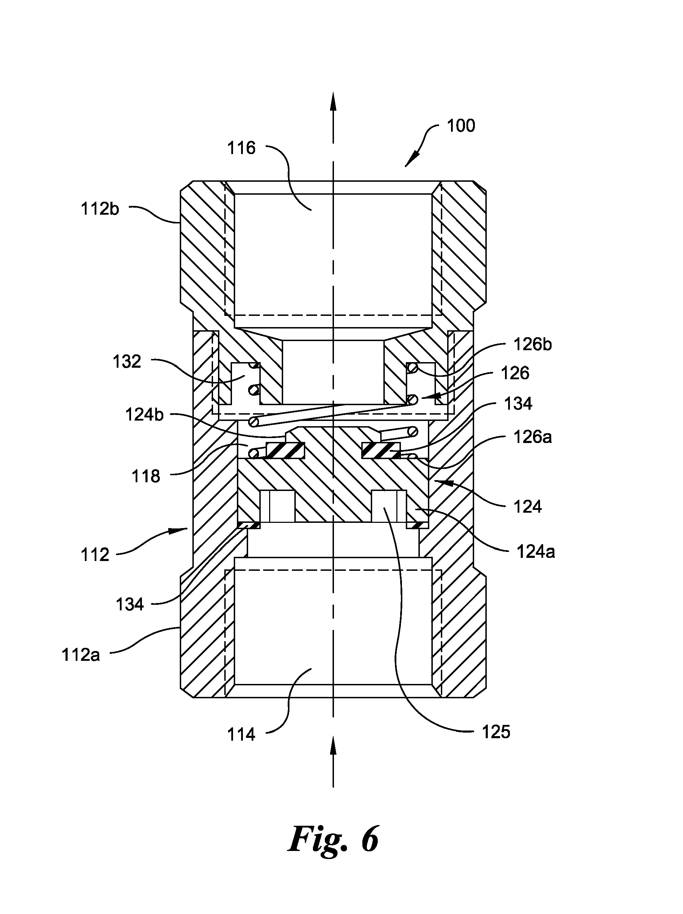

Referring to Fig. 6, there is shown another embodiment of the automatic intake air bleed valve assembly, generally designated 100, and hereinafter referred to as the "valve assembly 100" in accordance with the present invention. The assembly 100 has a two piece valve body 112 comprising an inlet component 112a and an outlet component 112b coupled to the inlet component 112a to form an internal chamber 118 having a generally cylindrical shape.

The inlet component 112a has an inlet port 114 in fluid communication with the internal chamber 118. The inlet port 114 may preferably have internal threads. Alternatively, the inlet component 112a may have external threads. The outlet component 112b has an outlet port 116 in fluid communication with the internal chamber 118. The outlet port 116 may preferably have internal threads. Alternatively, the outlet component 112b may have external threads.

A generally cylindrical piston 124 with grooves or passageways 125 to allow the flow of fluid from the inlet side 124a of the piston 124 to the outlet side 124b of the piston is provided in the internal chamber 118. The piston 124 is movable in translation between a first position P₁ in which the inlet side 124a of the piston 124 is in contact with the inlet port 114 and a second position P₂ in which the outlet side 124b of the piston 24 is in contact with the outlet port 116. When the piston 124 is in the first position P₁, contact between the inlet side 124a of the piston 124 and the inlet port 114 seals the inlet port 114 preventing the flow of fluid from the internal chamber 118 into the inlet port 114. When the piston 124 is in the second position P₂, contact between the outlet side 124b of the piston 124 and the outlet port 116 seals the outlet port 116 preventing the flow of fluid from the internal chamber 118 into the outlet port 116. In one embodiment, either the seating surfaces of the inlet and outlet ports 114, 116 or the seating surfaces of the inlet side 124a and/or outlet side 124b of the piston 124 may have a sealing material 134 such as an O-ring or gasket applied or attached thereto.

A position biasing member 126 is provided within the internal chamber 118 between the outlet port 116 and the piston 124. Preferably, the position biasing member 126 is a compression spring. The position biasing member 126 has a first end 126a proximal to the outlet side 124b of the piston 124 and a second end 26b proximal to the outlet port 116. The first end 126a of the position biasing member 126 is operatively coupled to the piston 124 in an manner that biases the piston 124 toward the inlet port 114 allowing the piston 124 to make a sealing contact with the inlet port 114 when the pressure in the inlet port 14 is less than the pressure in the inner chamber 118 thereby acting as a check valve preventing fluid flow from the inner chamber 118 into the inlet port 114. The second end 126b of the position biasing member 126 is operatively coupled to the wall of the inner chamber 18 proximal to the outlet port 116 in any manner allowing the valve body 112 to apply a reactive force to the position biasing member 26. In one embodiment, the second end 126b of the position biasing member 126 is retained in a circumferential channel 132 surrounding the outlet port 116.

Referring to Fig. 1, in a fire scene application, the valve assembly 10, 10', 100 allows the air to escape from the supply hose attached to the fire pump intake valve (or suction) 4 and closes when the water reaches the valve assembly 10, 10', 100. The valve assembly 10, 10', 100 remains closed under pressure to prevent water leakage. In the fire scene application, the hoses may or may not be lay-flat hoses and may have a diameter of at lease 3.5 inches and, more typically 5 to 6 inches.

Although the invention has been described in the context of a fire scene application, the valve assembly 10, 10', 100 is not limited to fire pumps. The valve assembly 10, 10', 100 may be configured for use in any application where air in a fluid supply line must be bled to atmosphere prior to the flow of a liquid in the supply line. In fire pump applications, the valve assembly 10, 10', 100 is desirably fabricated from a metal, preferably from alloy 360 brass and has polymeric seals. In other applications the material used for fabrication may be fluid and environment dependent.

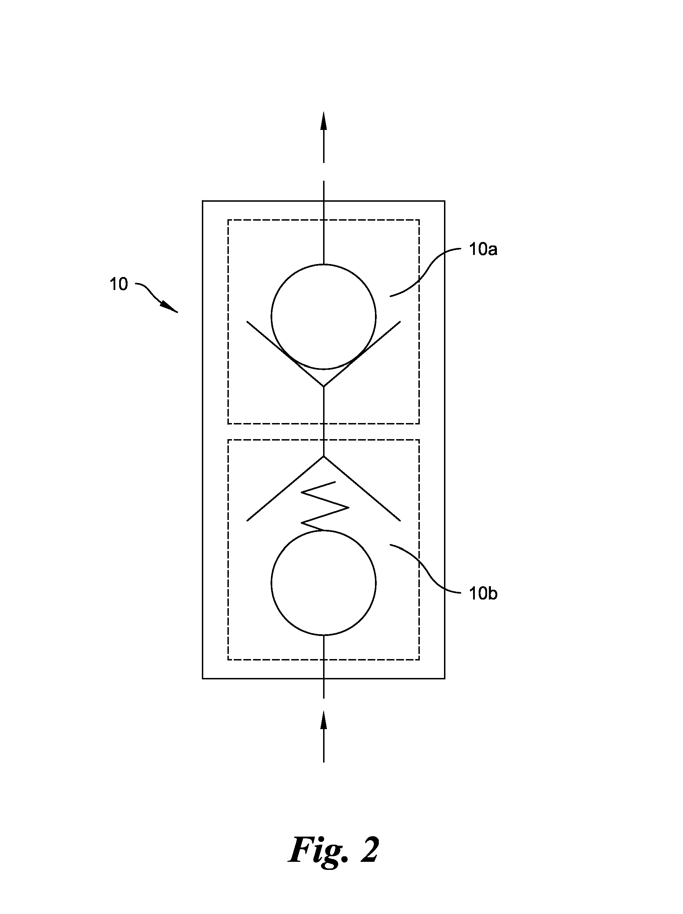

Further, the invention is also not limited to performing both a bleed valve and check valve function in one assembly. The valve assembly 10, 10', 100 may be redesigned as shown in the schematic in Fig. 2 such that each function is performed by a separate check valve sub-assembly 10a and a separate bleed valve sub-assembly 10b. In such instances, one of either the inlet port seating surface 20 or the outlet port seating surface 22 may not be present in the corresponding sub-assembly.

The foregoing detailed description of the invention has been disclosed with reference to specific embodiments. However, the disclosure is not intended to be exhaustive or to limit the invention to the precise forms disclosed. Those skilled in the art will appreciate that changes could be made to the embodiments described above without departing from the broad inventive concept thereof. Therefore, the disclosure is intended to cover modifications within the spirit and scope of the present invention as defined by the appended claims.

All references, patent applications, and patents mentioned above are incorporated herein by reference in their entirety and are not to be construed as an admission that any of the cited documents constitutes prior art, or as an admission against interest in any manner.

## Claims

1. An automatic bleed valve assembly for intake gas in an intake line supplying a liquid, the assembly comprising:
a body having an inlet port, an outlet port and a chamber in fluid communication with the inlet port and the outlet port;
an inlet-port sealing surface in the chamber;
an outlet-port sealing surface in the chamber;
a movable member in the chamber, the movable member movable in translation between an inlet-port sealing position in which the movable member is in sealing contact with the inlet-port sealing surface and an outlet-port sealing position in which the movable member is in sealing contact with the outlet-port sealing surface; and
a biasing member operatively coupled to the movable member and to the chamber, the biasing member configured to apply to the movable member a reactive force directed toward the inlet port, the reactive force being greater than a gas-resistance force applied to the movable member by the intake gas when the intake gas is flowing into the chamber and less than a liquid-resistance force applied to the movable member by the liquid when the liquid is flowing into the chamber.

2. The automatic bleed valve assembly according to claim 1, wherein the inlet-port sealing surface and a first end of the movable member proximal to the inlet port are congruent and the outlet-port sealing surface and the second end of the movable member proximal to the outlet port are congruent.

3. The automatic bleed valve assembly according to claim 1, wherein the inlet-port sealing surface is a beveled annulus and a first end of the movable member proximal to the inlet port has a generally conical shape.

4. The automatic bleed valve assembly according to claim 1, wherein a second end of the movable member proximal to the outlet port has generally cylindrical shape terminating in a disk-like surface sealingly contacting the outlet-port sealing surface when the movable member is in the second position.

5. The automatic bleed valve assembly according to claim 1, wherein the inlet-port sealing surface or the first end of the movable member has a channel supporting a sealing material.

6. The automatic bleed valve assembly according to claim 1, wherein the outlet-port sealing surface or the second end of the movable member has a channel supporting a sealing material.

7. The automatic bleed valve assembly according to claim 1, wherein the movable member is configured to move relative to the biasing member and sealingly contact the inlet-port sealing surface when an inlet-port pressure is less than a chamber pressure.

8. The automatic bleed valve assembly according to claim 1, wherein the biasing member is a coil spring.

9. The automatic bleed valve assembly according to claim 1, wherein the biasing -member is coupled to the movable member by a circumferential step extending radially outwardly from the movable member.

10. The automatic bleed valve assembly according to claim 1, wherein the inlet port is configured for fluid connection to a lay-flat hose and the intake valve of a pump.

11. The automatic bleed valve assembly according to claim 10 wherein the pump is a fire pump.

12. The automatic bleed valve assembly according to claim 1, wherein the movable member seals the outlet port when a liquid pressure in the chamber is more than about seven psi and less than about 10 psi and the movable member is spaced from the outlet port when a gas pressure in the chamber is more than about sixty psi and less than about one-hundred psi.
